# EUROPEAN PATENT SPECIFICATION

(11) **EP 2 238 389 B1**
(45) Date of publication and mention of the grant of the patent: **08.02.2017**
(21) Application number: 08866968.4
(22) Date of filing: 06.12.2008
(51) Int. Cl.: F25D 29/00, H05B 6/06, F24C 7/08, H02B 1/044

(54) **A HOUSEHOLD APPLIANCE**
HAUSHALTSGERÄT
APPAREIL MÉNAGER

(30) Priority: 31.12.2007 TR 200709258
(43) Date of publication of application: 13.10.2010
(73) Proprietor: Arçelik Anonim Sirketi, 34950 Istanbul (TR)
(72) Inventor: KALAYCI, Cemalettin, 34950 Istanbul (TR); TURKOZ, Serdar, 34950 Istanbul (TR); GOCER, Mehmet, 34950 Istanbul (TR)
(86) International application number: PCT/EP2008/066959
(87) International publication number: WO 2009/083393

(56) References cited:
- EP-A- 0 206 064
- DE-A1- 2 816 450
- DE-A1- 10 249 671
- DE-B3-102006 039 196
- US-A- 3 279 728
- US-A- 4 441 347
- US-A- 4 653 708

## Description

The present invention relates to a household appliance wherein the actuators can be easily mounted or dismounted.

In household appliances, preferably in cooking devices, the knobs allowing the user to make selections and displays for monitoring the operation of the household appliance are generally mounted on the front panel preferably made of glass material. Each knob is connected to an electronic, mechanical or electromechanical type of actuator (commutator, electric switch, energy regulator, thermostat, gas valve, tap etc.) behind the front panel for delivering the selection made by the user to the respective element in the household appliance by means of a shaft.

The shaft connected to the actuator and driven by the knob, is forced to bend when the actuator and the knob are not centered properly and the actuator may be damaged. The actuators are connected to the front panel and the knob by means of an intermediary panel in order to maintain a proper centering in the connection made with the knob. The intermediary panel furthermore supports the glass front panel from behind.

In the known technique, the actuator is directly secured on the intermediary panel with a screw or similar fixing element and the intermediary panel together with the actuator thereon is mounted on the front panel. When a malfunction of the actuator occurs, it is not possible to dismount the actuator from the intermediary panel without separating the front panel from the intermediary panel. Accordingly, in such a case the two panels are separated from each other. This operation, increases service costs and duration, moreover brings about problems of off centering of the actuator and the knob during maintenance. Hence the front panel and the intermediary panel are not desired to be separated due to hardships in service and modification operations.

In the state of the art International Patent Application No WO2007013023, a household appliance is explained comprising an actuator that is mounted on the rear surface of the knob casing by means of bayonet coupling without using elements such as screws. Further relevant state of the art can be found in DE 102 49 671 A1 and EP 0 206 064 A2.

The aim of the present invention is the realization of a household appliance comprising an actuator that is mounted detachably.

The household appliance realized in order to attain the aim of the present invention, explicated in the first claim and the respective claims thereof, comprises a connection member that maintains the actuator to be lock mounted on the intermediary panel, whereby the locking protuberances thereon fit into the channels on the intermediary panel.

Consequently, the actuator secured on the intermediary panel with a connection member can be mounted and dismounted from the intermediary panel without separating the front panel and the intermediary panel, which are fixed to each other during production of the household appliance. This, decreases the service duration and cost and prevents possible off centering of the knob - shaft.

The intermediary panel comprises two concave channels, with one end narrower than the other end and disposed around the shaft hole in rotational symmetry with respect to the shaft axis. By means of these channels resembling the "ying yang" shape, the locking protuberances are inserted into the channel and moved towards the narrowing portion thereby locking on the intermediary channel there.

The connection member comprises two locking protuberances conforming to the configuration of the channels and disposed around the shaft hole. The locking protuberance is formed by puncturing the steel sheet material of which the connection member is produced.

During assembly, the locking protuberance enters into the channel from the wide end of the channel and stops as the side wall thereof is inserted into the narrowing end of the channel. In this position, the intermediary panel is pressed between the side wall and ceiling of the locking protuberance and the surface thereof on the other side of the intermediary panel and the actuator is secured by locking on the intermediary panel by means of the connection member.

In another embodiment of the present invention, the household appliance comprises a latch on the connection member that is inserted into the locking hole on the intermediary panel. When the latch enters the locking hole, the connection member and hence the locking protuberances cannot move further in the channels and the connection member is locked on the intermediary panel.

In yet another embodiment of the present invention, the household appliance comprises supports shaped as protrusions, arranged on the connection member for keeping an equal distance between the intermediary panel and the connection member. In addition to this embodiment of the present invention, in another version of the present invention, housings shaped as recesses are provided on the intermediary panel at the level of the said supports. When the connection member is mounted on the intermediary panel, the supports are seated in these housings and maintain the centering to be made more effectively.

By means of the present invention, centering of the knob and the actuator is maintained by mounting the actuator detachably on the intermediary panel without using any fixing elements and without separating the front panel from the intermediary panel.

The household appliance realized in order to attain the aim of the present invention is illustrated in the attached figures, where:
Figure 1 - is the schematic view of a household appliance.
Figure 2 - is the rear perspective view of a front panel, an intermediary panel and an actuator mounted on the intermediary panel.
Figure 3 - is the front perspective view of a connection member.
Figure 4 - is the rear perspective view of the connection member.
Figure 5 - is the front perspective view of the actuator and the connection member secured thereon.
Figure 6 - is the front perspective view of the intermediary panel before the actuator is locked thereon.
Figure 7 - is the front perspective view of the intermediary panel after the actuator is locked thereon.
Figure 8 - is the rear perspective view of the intermediary panel before the actuator is locked thereon.
Figure 9 - is the rear perspective view of the intermediary panel after the actuator is locked thereon.

The elements illustrated in the figures are numbered as follows:
- 1.: Household appliance
- 2.: Front panel
- 3.: Knob
- 4.: Actuator
- 5.: Shaft
- 6.: Intermediary panel
- 7.: Channel
- 8.: Connection member
- 9.: Locking protuberance
- 10.: Locking hole
- 11.: Latch
- 12.: Fixing hole
- 13. , 13.': Shaft hole
- 14.: Support
- 15.: Housing
- 16.: Fixing element

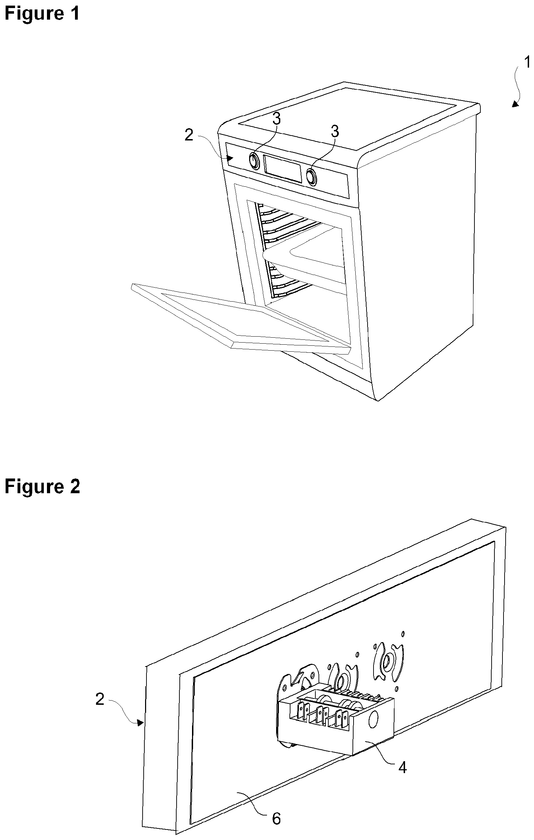

The household appliance (1) of the present invention comprises a front panel (1), one or more knobs (3) arranged on the front panel (2), and more than one actuator (4) disposed behind the front panel (2), having a shaft (5) passing from the back to the front of the front panel (2) and actuated by the knob (3) fitted thereon (Figure 1).

The household appliance (1) furthermore comprises an intermediary panel (6) of virtually the same dimensions as the front panel (2), secured on the rear of the front panel (2), having a shaft hole (13') where through the shaft (5) passes, and two concave channels (7) disposed to face each other on both sides of the shaft hole (13') and a connection member (8) secured to the actuator (4), having a shaft hole (13) where through the shaft (5) of the actuator (4) passes, two locking protuberances (9) situated on both sides of the shaft hole (13) that go into the channel (7) when bearing against the intermediary panel (6), passing to the rear surface of the intermediary panel (6), clasping the intermediary panel (6) from both surfaces thereby enabling the actuator (4) to be locked on the intermediary panel (6) (Figure 2).

Thus, the actuator (4) is secured on the intermediary panel (6) by means of the connecting member (8) without using any fastening elements. This enables the actuator (4) to be dismounted and remounted from/on the intermediary panel (6) when a malfunction of the actuator (4) occurs without separating the front panel (2) from the intermediary panel (6) which are attached to each other during the production of the household appliance (1).

The front panel (2) is preferably produced of glass material and comprises one or more shaft holes () where through the shaft (5) passes and whereon the knob (5) is mounted.

The intermediary panel (6) is preferably made of steel sheet material. The shaft holes (13') on the intermediary panel (6) are at the same level as the shaft holes (13) on the front panel (2). In the preferred embodiment of the present invention, one end of the channel (7) on the intermediary panel (6) is narrower than the other end and the other channel (7) is emplaced on the former channel (7) in rotational symmetry with respect to the shaft (5) axis.

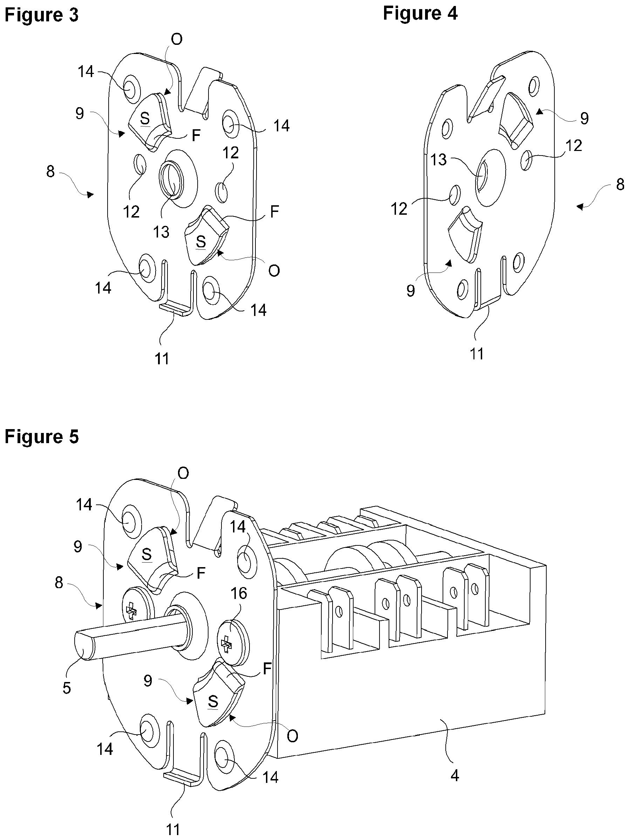

The connection member (8) is preferably made of steel sheet material and comprises at least one fixing hole (12) for securing thereof on each actuator (4) by means of the fixing element (16). The locking protuberance (9) on the connection member (8) is made by puncturing the surface and comprises a ceiling (S), two side walls (F) supporting the said ceiling (S) and an opening (0) formed by at least one side wall separating from the surface during the puncturing process. The locking protuberances (9) on the connection member (8) are disposed in rotational symmetry with respect to the shaft (5) axis conforming to the channels (7) wherein they are inserted (Figure 3 and Figure 4).

The assembly of the front panel (2), the intermediary panel (6), the connection member (8) and the actuator (4) are explained below:

The connection member (8) is fitted on the actuator (4) by passing the shaft (5) through the shaft hole (13) at its center and is secured on the actuator (4) from the fixing holes (12) by means of the fixing elements (16) (Figure 5).

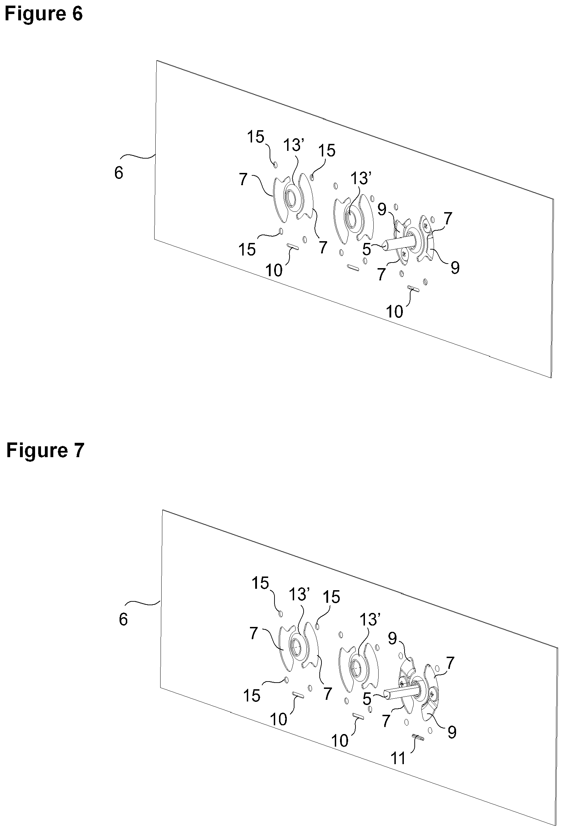

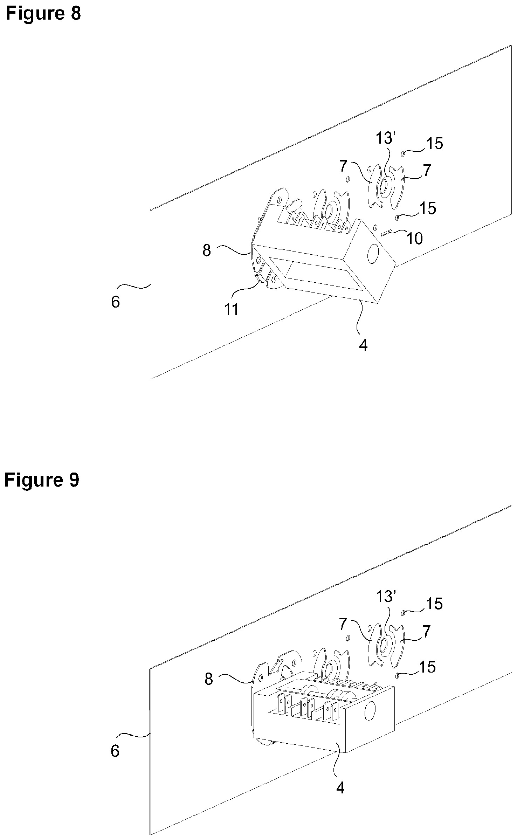

The actuator (4), together with the connection member (8) secured thereon, is fitted on the intermediary panel (6) secured to the front panel (2), with the shaft holes (13 and 13') being aligned and such that the shaft (5) passes through the shaft hole (13'). After the shaft (5) passes through the shaft hole (13'), the connection member (8) bears on the intermediary panel (6). As a result of bearing thereon, the locking protuberances (9) on the connection member (8) pass through the wide end of the channels (7) on the intermediary channel (6) entering into the channel (7) and pass behind the intermediary channel (6). In this position, the actuator (4) is inclined so that the locking protuberances (9) can be fitted into the channels (7) (Figure 6 and Figure 8).

When the connection member (8) is rotated around the shaft (5) axis towards the narrowing end of the channel (7), the locking protuberance (9) moves inside the channel (7) and the side wall (F) of the locking protuberance (9) is inserted into this narrowing portion of the channel (7) and stops by bearing against the side of the channel (7). In this position, the actuator (4) is in the straight position. During this movement, the side of the channel (7), hence some portion of the intermediary panel (6) enters into the opening (0) and the ceiling (S) of the locking protuberance (9) passing behind the intermediary panel (6) exerts pressure on the intermediary panel (6). The intermediary panel (6) is pressed on by the ceiling (S) and side wall (F) of the locking protuberance (9) and the connection member (8) is lock mounted on the intermediary panel (8) remaining between the portion of the connection member (8) on the other side of the intermediary panel (8) and the locking protuberance (8) exerting pressure on the rear surface of the intermediary panel (6). Finally, the knob (3) is mounted on the shaft (4) projecting from the front panel (2) completing the assembly of the knob (3) to the front panel (2) and the actuator (4). This prevents the actuator (4) from moving in the horizontal direction on the intermediary panel (6) plane and also in the vertical direction to this plane. Thus, the actuator (4) is rigidly mounted on the front panel (2) by fastening the connection member (8) secured to the actuator (4) on the intermediary panel (6) mounted to the front panel (2) (Figure 7 and Figure 9).

When the actuator (4) is desired to be dismounted from the intermediary panel (6), the connection member (8) is rotated around the shaft (5) axis - in the reverse direction of mounting - towards the widening end of the channel (7). The locking protuberance (9) moves inside the channel (7) and the side wall (F) of the locking protuberance (9) is released from this narrowing portion of the channel (7) and passes to the widening end of the channel (7). In this position, the actuator (4) is again in the inclined position. When the actuator (4) and the connection member (8) are pulled with a force vertical to the intermediary panel (6), the locking protuberance (9) is released from the channel (7) and simultaneously the connection member (8) is detached from the intermediary panel (6). Consequently, the actuator (4) can be detachably mounted on the intermediary panel (6), by means of the connection member (8) secured thereon, without requiring the use of any fastening elements.

In another embodiment of the present invention, the household appliance (1) comprises a locking hole (10) on the intermediary panel (6) and a latch (11) disposed on the connection member (8) that is fitted into the locking hole (10). When the latch (11) is inserted in the locking hole (10), the locking process is completed since the actuator (4) is prevented from turning further on the intermediary panel (6).

In another embodiment of the present invention, the household appliance (1) comprises at least one support (14) on the connection member (8), shaped as a protrusion so that the actuator (4) stands in balance by maintaining an equal distance between the intermediary panel (6) and the connection member (8). In another version of this embodiment of the present invention, the household appliance (1) comprises at least one housing (15) shaped as a recess, on the intermediary panel (6) in places corresponding to the said supports (14). When the actuator (4) is locked on the intermediary panel (6), the supports (14) are seated in the housings (15).

The actuator (4) is detachably mounted on the intermediary panel (6) by means of the connection member (8) without using any fastening elements. Moreover, by means of the present invention, if the actuator (4) malfunctions while using the household appliance (1), the actuator (4) can be dismounted from the intermediary panel (6) and mounted again in place without separating the front panel (2) and the intermediary panel (6). This shortens the service duration and reduces costs.

## Claims

1. A household appliance (1) that comprises a front panel (1), one or more knobs (3) arranged on the front panel (2), more than one actuator (4) disposed behind the front panel (2), having a shaft (5) passing from the back to the front of the front panel (2) and actuated by the knob (3) fitted thereon and an intermediary panel (6) of virtually the same dimensions as the front panel (2), secured on the rear of the front panel (2) and having a shaft hole (13') where through the shaft (5) passes, **and characterized by**
- an intermediary panel (6) having two concave channels (7) disposed to face each other on both sides of the shaft hole (13') and wherein said two channels (7) are with one end narrower than the other end and disposed in rotational symmetry with respect to the shaft (5) axis, and
- a connection member (8) secured to the actuator (4), having a shaft hole (13) where through the shaft (5) of the actuator (4) passes, two locking protuberances (9), that are made by puncturing the surface, having a ceiling (S), two side walls (F) supporting the said ceiling (S) and an opening (O) which is directed partially to the radially outward direction with respect to the shaft (5) and formed by at least one side wall (F) separating from the surface during the puncturing process, said two locking protuberances (9) situated on both sides of the shaft hole (13) that go into the channel (7) when bearing the intermediary panel (6), passing to the rear surface of the intermediary panel (6), clasping the intermediary panel (6) from both surfaces, thereby enabling the actuator (4) to be locked on the intermediary panel (6).

2. The household appliance (1) as in Claim 1, **characterized by** locking protuberances (9) that are disposed in rotational symmetry with respect to the shaft (5) axis conforming to the channels (7) wherein they are inserted.

3. The household appliance (1) as in Claim 1 or 2, **characterized by** a locking hole (10) disposed on the intermediary panel (6) and a latch (11) situated on the connection member (8) that is fitted into the locking hole (10).

4. The household appliance (1) as in any one of the above Claims, **characterized by** at least one support (14) disposed on the connection member (8), shaped as a protrusion so that the actuator (4) stands in balance by maintaining an equal distance between the intermediary panel (6) and the connection member (8).

5. The household appliance (1) as in Claim 4, **characterized by** at least one housing (15) arranged on the intermediary panel (6), shaped as a recess, in places corresponding to the supports (14) and wherein the supports (14) are seated when the actuator (4) is locked on the intermediary panel (6).

## Patentansprüche

1. Haushaltsgerät (1), das eine Frontblende (2), einen oder mehrere Knöpfe (3), die an der Frontblende (2) angeordnet sind, mehrere Stellglieder (4), die hinter der Frontblende (2) angeordnet sind und eine Welle (5) aufweisen, die von der Rückseite zur Vorderseite der Frontblende (2) verläuft, und durch den daran angebrachten Knopf (3) betätigt werden, und eine Zwischenblende (6) mit im Wesentlichen den gleichen Abmessungen wie die Frontblende (2), die auf der Rückseite der Frontblende (2) befestigt ist und eine Wellenbohrung (13') aufweist, durch die die Welle (5) verläuft, **und gekennzeichnet durch**
- eine Zwischenblende (6) mit zwei konkaven Kanälen (7), die auf beiden Seiten der Wellebohrung (13') einander zugewandt angeordnet sind, und wobei die zwei Kanäle (7) am einen Ende schmaler als am anderen Ende sind und in Rotationssymmetrie in Bezug auf die Achse der Welle (5) angeordnet sind, und
- ein Verbindungselement (8), das an dem Stellglied (4) befestigt ist und eine Wellebohrung (13), **durch** die die Welle (5) des Stellglieds (4) verläuft, und zwei Verriegelungsvorsprünge (9) aufweist, die **durch** Durchstechen der Fläche gebildet sind und eine Decke (S), zwei Seitenwände (F), die die Decke (S) tragen, und eine Öffnung (O) aufweisen, die teilweise in die in Bezug auf die Welle (5) radial äußere Richtung gerichtet ist und **durch** wenigstens eine Seitenwand (F) gebildet ist, die während des Durchstechungsvorgangs von der Fläche getrennt wird, wobei die zwei Verriegelungsvorsprünge (9) auf beiden Seiten der Wellenbohrung (13) angeordnet sind, in den Kanal (7) eintreten, wenn sie die Zwischenblende (6) tragen, zur Rückseite der Zwischenblende (6) verlaufen, die Zwischenblende (6) von beiden Flächen aus ergreifen und **dadurch** ermöglichen, dass das Stellglied (4) an der Zwischenblende (6) verriegelt wird.

2. Haushaltsgerät (1) nach Anspruch 1, **dadurch gekennzeichnet, dass** die Verriegelungsvorsprünge (9) in Übereinstimmung mit den Kanälen (7), in die sie eingeführt sind, in Rotationssymmetrie in Bezug auf die Achse der Welle (5) angeordnet sind.

3. Haushaltsgerät (1) nach Anspruch 1 oder 2, **gekennzeichnet durch** eine Verriegelungsbohrung (10), die an der Zwischenblende (6) angeordnet ist, und eine Lasche (11), die an dem Verbindungselement (8) angeordnet ist und in die Verriegelungsbohrung (10) eingesetzt ist.

4. Haushaltsgerät (1) nach einem der vorangehenden Ansprüche, **gekennzeichnet durch** wenigstens einen Träger (14), der an dem Verbindungselement (8) angeordnet ist und als ein Vorsprung geformt ist, derart, dass das Stellglied (4) balanciert steht, indem ein gleicher Abstand zwischen der Zwischenblende (6) und dem Verbindungselement (8) beibehalten wird.

5. Haushaltsgerät (1) nach Anspruch 4, **gekennzeichnet durch** wenigstens ein Gehäuse (15), das an der Zwischenblende (6) angeordnet ist und an Stellen, die den Trägern (14) entsprechen, als eine Vertiefung geformt ist, und in dem die Träger (14) sitzen, wenn das Stellglied (4) an der Zwischenblende (6) verriegelt ist.

## Revendications

1. Un électroménager (1) qui comprend un panneau avant (2), un ou plusieurs boutons rotatifs (3) qui sont arrangés sur le panneau avant (2), plus d'un actionneur (4) qui est disposé derrière le panneau avant (2), qui présente un arbre (5) passant de l'arrière à l'avant du panneau avant (2) et qui est actionné par le bouton rotatif (3) monté sur celui-ci et un panneau intermédiaire (6) avec les dimensions pratiquement identiques au panneau avant (2), qui est fixé sur l'arrière du panneau avant (2) et qui présente un trou d'arbre (13') à travers lequel l'arbre (5) passe, et **caractérisé par**
- un panneau intermédiaire (6) présentant deux canaux concaves (7) disposés face à face sur les deux côtés du trou d'arbre (13') et où lesdits deux canaux (7) sont disposés en symétrie de rotation par rapport à l'axe de l'arbre (5) de telle sorte qu'une extrémité de ceux-ci est plus étroite que l'autre extrémité, et
- un élément de raccordement (8) qui est fixé à l'actionneur (4), qui présente un trou d'arbre (13) à travers lequel l'arbre (5) de l'actionneur (4) passe, deux protubérances de verrouillage (9) qui sont réalisées par le perçage de la surface, qui présentent un plafond (S), deux parois latérales (F) supportant ledit plafond (S) et une ouverture (O) qui est dirigée partiellement dans la direction s'étendant radialement vers l'extérieur par rapport à l'arbre (5) et formée par au moins une paroi latérale (F) séparant de la surface pendant le processus de perçage, lesdites deux protubérances de verrouillage (9) situées sur les deux côtés du trou d'arbre (13) qui s'entrent dans le canal (7) lorsqu'elles s'appuient sur le panneau intermédiaire (6), qui passent à la surface arrière du panneau intermédiaire (6), qui serrent le panneau intermédiaire (6) des deux surfaces, permettant ainsi le verrouillage de l'actionneur (4) sur le panneau intermédiaire (6).

2. Un électroménager (1) selon la Revendication 1, **caractérisé par** les protubérances de verrouillage (9) qui sont disposées en symétrie de rotation par rapport à l'axe de l'arbre (5) conformes aux canaux (7) dans lesquels elles sont insérées.

3. Un électroménager (1) selon la Revendication 1 ou 2, **caractérisé par** un trou de verrouillage (10) qui est disposé sur le panneau intermédiaire (6) et un verrou (11) qui est situé sur l'élément de raccordement (8), qui est placé dans le trou de verrouillage (10).

4. Un électroménager (1) selon l'une quelconque des revendications précédents, **caractérisé par** au moins un support (14) qui est disposé sur l'élément de raccordement (8), qui est formé comme une protubérance de telle sorte que l'actionneur (4) est en équilibre en maintenant une distance égale entre le panneau intermédiaire (6) et l'élément de raccordement (8).

5. Un électroménager (1) selon la Revendication 4, **caractérisé par** au moins un logement (15) qui est arrangé sur le panneau intermédiaire (6), qui est formé comme un évidement, à des niveaux correspondant aux supports (14) et dans lesquels les supports (14) sont placés lorsque l'actionneur (4) est bloqué sur le panneau intermédiaire (6).
